# FASCICULE DE BREVET EUROPEEN

(11) **EP 0 402 210 B1**
(45) Date de publication et mention de la délivrance du brevet: **30.08.1995**
(21) Numéro de dépôt: 90401476.8
(22) Date de dépôt: 01.06.1990
(51) Int. Cl.: G06F 11/08

(54) **Procédé pour vérifier l'intégrité d'un logiciel ou de données, et système pour la mise en oeuvre de ce procédé**
Verfahren zum Überprüfen der Integrität eines Programms oder von Daten und Einrichtung zur Durchführung dieses Verfahrens
Method for verifying the integrity of software or data and system for implementing this method

(30) Priorité: 06.06.1989 FR 8907429
(43) Date de publication de la demande: 12.12.1990
(73) Titulaire: BULL CP8, 78430 Louveciennes (FR)
(72) Inventeur: Oisel, André, F-78990 Elancourt (FR); Ugon, Michel, F-78310 Maurepas (FR)
(74) Mandataire: Corlu, Bernard Edouard

(56) Documents cités:
- EP-A- 0 280 035
- DE-A- 3 709 524
- IEEE SYMPOSIUM ON SECURITY AND PRIVACY, Oakland, CA, 18-21 avril 1988, pages 52-58, IEEE, New York, US; M.K. JOSEPH et al.: "A fault telerance approach to computer viruses"
- IEEE SYMPOSIUM ON SECURITY AND PRIVACY, Oakland, CA, 1-3 mai 1989, pages 312-318, IEEE, New York, US; G.I. DAVIDA et al.: "Defending systems against viruses through cryptographic authentication"

## Description

L'invention est relative à un système pour vérifier l'intégrité d'un logiciel ou de données, et à un système pour la mise en oeuvre de ce procédé. Elle permet de vérifier que des informations telles que des données qui doivent demeurer constantes d'une utilisation à l'autre d'un système informatique, et qui sont mémorisées sur un support, en des endroits précis de ce support, ou bien encore que des informations constituant les instructions de fonctionnement d'un programme informatique, encore appelé logiciel, n'ont pas été altérées de façon volontaire ou accidentelle entre des utilisations successives. En effet, pour qu'un logiciel fonctionne correctement, il ne faut pas que ses instructions (ou bien encore que des données nécessaires entre deux utilisations successives) soient modifiées de façon anarchique.

En effet, depuis que les ordinateurs sont d'un usage quasi généralisé, n'importe quel utilisateur peut accéder aux programmes d'application, ou bien encore aux systèmes d'exploitation des ordinateurs.

Il arrive, en raison de cette possibilité d'accès généralisé, que des utilisateurs commettent des erreurs de manipulation, qui se traduisent par une altération du programme ou des données nécessaires au fonctionnement du système informatique, ou bien encore que de façon volontaire, certaines personnes mal intentionnées modifient la structure des programmes, ou le contenu des données d'un système informatique, afin de perturber le fonctionnement du système. Dans ce dernier cas, le problème est encore plus crucial que lors d'une modification suite à une erreur, puisque la modification volontaire peut consister à introduire dans le programme, ou dans les données, des éléments parasites tels que des instructions qui, lorsqu'ils sont pris en compte par le programme, entraînent une auto-modification de ce dernier, qui peut aller jusqu'à sa destruction complète, par effet de diffusion de proche en proche.

Par ailleurs, la plupart des logiciels sont maintenant protégés contre la recopie, et contiennent à cet effet des moyens qui permettent que lors d'une copie, la copie, ou bien même l'exemplaire original soit pollué et/ou se dégénère au fur et à mesure des utilisations successives. Ceci peut poser un problème lorsqu'un utilisateur de bonne foi a acheté une copie faite en fraude et voit rapidement le logiciel devenir inutilisable.

Ce genre de pollution des logiciels ou des données entraîne une dégénérescence progressive du logiciel et est beaucoup plus difficile à détecter qu'une pollution entraînant un dysfonctionnement immédiat du logiciel. En effet, ce dernier type de pollution, entraînant un dysfonctionnement immédiat, est remarquable très rapidement, puisque généralement ceci se traduit par des résultats de traitement aberrants.

Par contre, une pollution entraînant une dégénérescence de proche en proche, surtout lorsqu'elle est faite dans un but nuisible, n'est pas forcément détectable à la seule lecture des résultats, car elle peut être introduite d'une façon telle que les résultats effectués lors des premières utilisations soient corrects ou tout au moins le semblent, les erreurs détectables se manifestant à l'issue d'un certain nombre d'utilisations.

Enfin, un dernier type de pollution peut consister, après qu'un logiciel correct ait été chargé en vue de son exécution, notamment lorsque le système fonctionne en réseau, à faire en sorte que des instructions parasites soient intercalées ou substituées à certaines des instructions normales de fonctionnement du logiciel. Ceci peut se faire à distance, par exemple par l'intermédiaire de lignes de transmission.

Dans ce cas, l'utilisateur qui a chargé le logiciel, même s'il sait que le logiciel original qu'il a chargé est correct, ne peut pas forcément détecter l'intrusion et la modification faite de l'extérieur, et il en résulte qu'il lance le programme qui va donner des résultats de traitement immédiatement aberrants.

Les instructions ou données mises en oeuvre dans un système informatique sont codées sous forme de mots binaires, comportant chacun un nombre déterminé de bits. Un format usuel est l'octet, c'est-à-dire qu'un mot contient huit bits, pouvant avoir un état logique "0" ou un état logique "1". Selon le type d'instructions ou de données, il peut être nécessaire d'employer pour une même instruction ou une même donnée plusieurs mots, et un logiciel est constitué par une succession de ces mots. Les altérations, dont il a été fait mention auparavant, peuvent consister, soit à rajouter des mots binaires, donc des instructions ou des données parasites, soit à modifier l'état d'un ou plusieurs bits de certains mots du programme original.

Une première solution connue, pour détecter des altérations, et qui peut s'avérer satisfaisante lorsqu'une instruction ou une donnée a été modifiée de façon involontaire, consiste à signer le logiciel, c'est-à-dire que suite aux instructions ou aux données, un ou plusieurs mots binaires constituent la signature du logiciel et/ou des données. A cet effet, on considère que le programme original est un message M auquel on fait subir une transformation S = f(M), dont le résultat S constitue une signature, que l'on appose à un endroit déterminé du logiciel. Par exemple, la signature peut être constituée par le dernier mot du logiciel.

Afin de vérifier la signature au moment du chargement ultérieur du logiciel, en vue d'une utilisation, la signature du logiciel chargé est recalculée et comparée avec la signature mémorisée sur le support. En cas de concordance, ceci signifie que l'original n'a pas été altéré. Un tel procédé est connu, par exemple, de EP-A-280 035.

Cependant, en cas de fraude volontaire, un fraudeur compétent qui connaîtrait la fonction ou l'algorithme utilisé pour calculer la signature, peut faire en sorte qu'à chaque intrusion illicite, la signature mémorisée soit modifiée, et qu'en conséquence, lors de l'utilisation suivante, il y ait concordance entre la signature recalculée et la signature dernièrement mémorisée sur le support du logiciel ou de données. Ainsi, une personne chargée de vérifier la conformité de la signature, en mettant en oeuvre l'algorithme de transformation du message, trouve une concordance et ne découvre pas l'intrusion.

Par ailleurs, cette méthode est difficilement applicable dans le cas où le logiciel est de taille importante, car chaque calcul de signature, en vue d'une vérification, nécessite un certain temps, pendant lequel le logiciel n'est pas utilisé pour la fonction pour laquelle il a été prévu.

L'invention a pour but de remédier à ces inconvénients, en proposant un procédé et un système qui permettent de vérifier en toutes circonstances, de façon rapide et fiable, qu'un logiciel ou des données sont conformes et n'ont pas été altérés de façon volontaire ou non entre deux utilisations.

L'invention est définie par les revendications indépendantes jointes.

Elle concerne un procédé pour vérifier l'intégrité, par rapport à un message original, d'un message subséquent contenant des informations, consistant à faire calculer par des moyens de traitement une signature à partir du message original auquel on applique un algorithme, caractérisé en ce qu'il comprend les étapes consistant à :
- diviser le message original en un nombre total de modules
- utiliser les dits moyens de traitement pour appliquer le dit algorithme à chaque module du message original pour calculer une signature respective de chaque module ;
- utiliser un objet portatif électronique possédant des circuits de traitement et des moyens de mémorisation incluant une zone de mémoire protégée non volatile accessible seulement par les dits circuits de traitement, et mémoriser les dites signatures dans la zone de mémoire protégée et le dit algorithme dans les moyens de mémorisation ;

et vérifier les messages subséquents dans l'objet portatif par les étapes consistant à :
- sélectionner, dans les messages subséquents, un nombre partiel de modules inférieur au nombre total de modules, le dit nombre partiel étant tel que la probabilité de détecter une altération dans le message subséquent, en considérant seulement le dit nombre partiel de modules, a une valeur déterminée ;
- utiliser les circuits de traitement pour appliquer le dit algorithme à chaque module sélectionné de façon à calculer une signature respective ;
- sélectionner dans la zone de mémoire protégée les signatures des modules du message original qui correspondent aux modules sélectionnés du message subséquent et comparer ces signatures avec celles du message subséquent ; et
- faire envoyer par l'objet portatif une réponse indiquant si l'intégrité entre les messages original et subséquent est confirmée, c'est-à-dire si les dites signatures du message original correspondent respectivement à celles du message subséquent.

L'invention est donc particulièrement avantageuse car elle peut être mise en oeuvre à tout moment de la durée de vie du logiciel ou des données. En effet, la mémorisation des signatures, à l'intérieur d'un objet portatif, qui peut être avantageusement un dispositif du genre carte à mémoire et à microcircuits électroniques, peut être faite à tout moment, par n'importe quel utilisateur qui désire se protéger. Ceci peut être fait par le concepteur, et dans ce cas l'objet portatif est fourni avec le logiciel ; ceci peut être effectué par un utilisateur qui désire vérifier que, au fur et à mesure des utilisations, son logiciel reste intègre. Dans un tel cas, l'utilisateur se procure un objet portatif spécifique vierge, et fait se dérouler le programme de calcul de signatures au moment qu'il désire, en vue de leur mémorisation, puis de façon arbitraire, à l'aide de cet objet portatif, il peut parfois vérifier l'intégrité du logiciel.

Par ailleurs, étant donné que le calcul des signatures en vue de leur comparaison avec les signatures initialement stockées s'effectue à l'intérieur de l'objet portatif, et puisque le contrôle de la conformité des signatures s'effectue en extrayant des signatures mémorisées dans une zone accessible seulement par les circuits de traitement de l'objet portatif, il est impossible à un fraudeur de tromper le système. En effet, ce sont les circuits de l'objet portatif qui recalculent chaque signature et les envoient aux circuits de comparaison qui ne sont accessibles que sous contrôle des circuits de traitement. En conséquence, si le message n'est pas intègre, il est impossible d'envoyer une fausse signature à l'adresse des circuits de comparaison, de sorte que toute modification ou intrusion est immédiatement détectée.

De plus, le fait de faire porter la vérification du message, non pas sur le nombre total m de modules, mais sur un nombre partiel p inférieur à m permet de réduire avantageusement le temps de calcul nécessaire à la vérification. Dans la mesure où le calcul est effectué dans un objet portatif, c'est-à-dire un dispositif ayant des moyens de calcul forcément limités par le volume disponible, cette réduction du temps de calcul est précieuse.

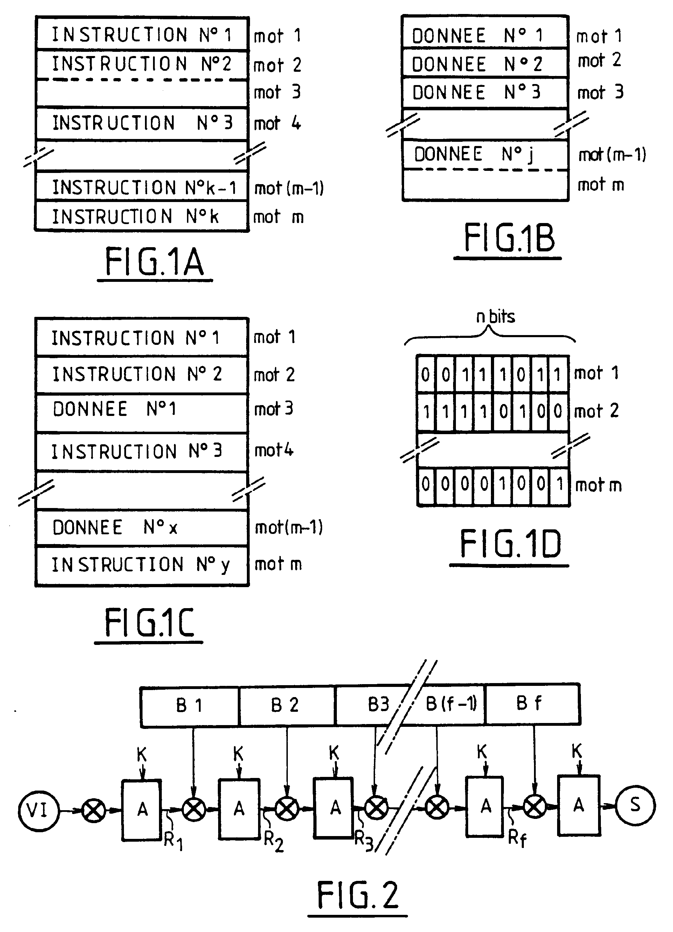

D'autres caractéristiques et avantages de l'invention apparaîtront avec la description ci-après, faite en regard des figures 1 à 6 annexées illustrant le principe, et certains moyens de mise en oeuvre de la présente invention.

Sur les figures 1A à 1D, on a illustré la structure connue en soi d'une suite d'informations, à laquelle la présente invention est susceptible de s'appliquer.

La figure 1A illustre le schéma type de la structure d'un logiciel. Un logiciel est composé d'une suite d'instructions, dans l'exemple numéro 1 à numéro k, codées sous forme binaire, à l'aide de mots repérables chacun par leur adresse. Dans l'exemple illustré, le logiciel comporte m mots binaires, m pouvant être égal ou supérieur à k. En effet, selon le type d'instructions, le codage d'une même instruction peut affecter plusieurs mots binaires. C'est ce que l'on a illustré sur cette figure 1A où l'instruction N° 2 est codée sur deux mots, les mots 2 et 3. Chaque mot comporte généralement, dans un système informatique structuré, un nombre n de bits déterminés, qui est généralement de la taille d'un octet, c'est-à-dire de huit bits, ou un multiple de l'octet. Bien entendu, ceci n'est pas limitatif et l'invention pourrait également s'appliquer à n'importe quelle autre structure de logiciel dans lequel le format des mots pourrait varier de l'un à l'autre.

Un logiciel ainsi structuré, avec des mots de même longueur, c'est-à-dire n bits, si on le prend dans un ordre déterminé constitue un message de longueur totale, exprimée en bits L = m x n. De façon générale, la longueur totale du message est constituée par la somme de l'ensemble des bits constituant chacun des mots utilisés pour la séquence d'instructions.

L'invention est également applicable à la vérification de l'intégrité de séquences de données, ce que l'on a illustré par la figure 1B. En effet, il peut être nécessaire de vérifier l'intégrité de données qui sont susceptibles d'être utilisées de façon répétitive, car par exemple nécessaires au déroulement d'un programme.

Les données peuvent être indépendantes du programme, comme illustré par la figure 1B sur laquelle on a représenté un ensemble de m mots de n bits contenant un nombre j de données.

Comme les instructions, les données peuvent être codées sur plusieurs mots binaires, ce qui explique que le nombre j de données puisse être différent du nombre n de mots contenant ces données, c'est-à-dire que j peut être inférieur ou égal à m.

La figure 1C illustre un exemple particulier de logiciel dans lequel sont mélangées des instructions et des données (x données et y instructions).

Il faut remarquer, d'une façon générale, qu'une instruction peut être considérée comme une donnée particulière.

Généralement, un logiciel est implanté sur un support particulier, par exemple dans la mémoire centrale d'un ordinateur, ou bien encore sur le disque dur contenant les programmes d'un micro-ordinateur. Egalement, il peut être utilisé directement à partir du support d'origine, tel que la disquette sur laquelle il a été implanté au départ. Une non intégrité du logiciel, volontaire ou non, se traduit par une modification de l'un ou l'autre des mots dont il a été fait mention précédemment.

La figure 1D montre qu'un mot est en fait constitué par un ensemble de bits pouvant prendre la valeur "0" ou "1", et la modification d'un mot se traduit par le changement d'état de l'un des bits au moins. Une autre modification peut consister à superposer aux instructions ou données d'origine, des instructions ou données parasites. Ceci peut survenir lorsque le logiciel est chargé sur un autre support que son support d'origine, par exemple lorsque le logiciel est implanté sur un disque dur, afin d'être utilisé à partir de ce disque dur.

Lorsqu'une instruction ou une donnée, soit parasite, soit modifiée, est lue, il peut se produire alors des phénomènes incontrôlables.

La présente invention consiste à considérer que la suite des instructions ou données, que l'on désignera dans la suite de la description indifféremment par l'un ou l'autre de ces termes, ou par le terme information, puisque l'invention s'applique indifféremment à la vérification de l'intégrité de logiciels et/ou de données, constitue un message de longueur L exprimée en bits, dont la valeur de L est égale au nombre de bits constituant le message.

Une première solution, applicable directement aux messages de taille réduite, consiste à précalculer une signature électronique du message, en utilisant un algorithme de transformation A de ce message, ledit algorithme pouvant prendre en compte en outre au moins une clé secrète, puis en stockant la signature obtenue S dans la mémoire électronique d'une carte à microcalculateur possédant l'algorithme utilisé pour le précalcul de signature, et l'objet portatif comporte en outre une zone de mémoire accessible par les seuls circuits de traitement qu'il incorpore, contenant la clé secrète au cas où elle a été utilisée lors du précalcul de la signature.

Au moment de la vérification de l'intégrité d'un message, l'utilisateur connecte l'objet portatif au système contenant le logiciel, et lance un programme de vérification qui a pour effet de faire recalculer, par les circuits de traitement de l'objet portatif, à l'aide de l'algorithme qu'il incorpore, et le cas échéant de la clé secrète, une autre signature prenant en compte la suite de bits constituant le message à vérifier.

La signature recalculée est alors comparée, à l'aide des circuits de traitement de l'objet portatif, à la signature initialement calculée et stockée dans la mémoire de l'objet portatif, et accessible seulement par les circuits de traitement de ce dernier. Si le message ayant servi de base au calcul de la première signature est identique à celui ayant servi à la vérification, c'est-à-dire dans le cas où le logiciel et/ou les données n'ont pas été altérés, alors la signature enregistrée dans la mémoire de l'objet portatif est identique à la signature recalculée, ce qui peut être indiqué à la personne effectuant la vérification.

On voit immédiatement un autre intérêt de l'invention : puisque la signature calculée pour le contrôle l'est par les circuits de traitement de l'objet portatif, et est comparée à l'intérieur de l'objet portatif, par les mêmes circuits de traitement, il devient impossible de simuler une fausse signature, car elle ne serait pas prise en compte par les circuits de traitement, contrairement à ce qui se passait dans l'art antérieur où un fraudeur pouvait associer à un logiciel et/ou à des données une fausse signature correspondant au logiciel ou aux données remaniées.

La figure 2 illustre le principe d'un mode de mise en oeuvre de la présente invention, en vue d'effectuer le calcul de la signature qui doit être stockée dans la mémoire de l'objet portatif servant par la suite au contrôle, et en utilisant une clé secrète K.

Le message M de longueur L, est par exemple découpé en blocs élémentaires B1, B2 ... Bf, dont chacun contient un nombre de bits compatible avec le format de travail des circuits de traitement effectuant le calcul de la signature. On pourrait par exemple envisager que chaque bloc contienne un bit, mais avec les circuits de traitement actuels, chaque bloc sera plutôt constitué par un nombre de bits multiple de l'octet. Le premier bloc B1 peut par exemple être constitué par le premier mot du message servant de base à la signature, le second bloc B2 peut être constitué par le second mot du message, et ainsi de suite jusqu'au dernier bloc Bf qui est constitué par le dernier mot du message. Bien entendu, il est tout à fait envisageable de compliquer la tâche à un fraudeur, en utilisant un algorithme de calcul qui considère les mots, ou bien encore les bits de chaque mot dans un ordre différent de l'ordre dans lequel ils apparaissent sur le support sur lequel ils sont implantés.

Le principe mis en oeuvre consiste à calculer une signature dont le format est utilisable directement par les circuits de traitement de l'objet portatif, alors que le nombre de bits constituant le message peut être nettement supérieur au nombre de bits correspondant au format de traitement des circuits.

Le principe mis en oeuvre illustré par la figure 2, consiste à effectuer autant d'opérations qu'il y a de blocs, et a combiner le résultat de chacune de ces opérations, de façon à obtenir une signature S possédant un nombre (s) de bits limité. Une valeur d'initialisation VI peut être appliquée à l'entrée des circuits de traitement prenant en compte l'algorithme A, et la clé secrète K est appliquée sur une autre entrée des mêmes circuits, de sorte que l'application de la clé secrète K et de la valeur d'initialisation VI procure un premier résultat intermédiaire qui est combiné avec le contenu du premier bloc B1, par exemple par l'intermédiaire d'une fonction OU EXCLUSIF. Le résultat de la transformation est réalisé grâce au OU EXCLUSIF qui est alors appliqué sur une première entrée des circuits de traitement prenant en compte l'algorithme, la seconde entrée prélevant la clé secrète K, de sorte qu'un second résultat intermédiaire est obtenu en sortie des circuits de traitement qui est combiné avec le contenu du second bloc B2 par l'intermédiaire de la même fonction de transformation, c'est-à-dire le OU EXCLUSIF.

Il en est ainsi pour chacun des blocs, chacun leur tour jusqu'au dernier Bf, dont le contenu est combiné par l'intermédiaire de la fonction OU EXCLUSIF avec un résultat antérieur Rf obtenu par les circuits de traitement, par application de l'algorithme A sur la clé secrète K et sur le résultat du OU EXCLUSIF précédent. Le résultat obtenu à partir du OU EXCLUSIF appliqué sur le contenu du bloc Bf et sur le résultat antérieur Rf, est combiné à la clé K par l'intermédiaire de l'algorithme A dans les circuits de calcul de la signature, et le résultat de cette dernière combinaison constitue la signature S.

Il est bien entendu que la valeur d'initialisation VI doit être la même que celle qui servira aux calculs ultérieurs, en vue d'une vérification.

Lorsque la signature S a été calculée, elle est alors stockée dans la mémoire de l'objet portatif, de façon à pouvoir servir de référence pour un contrôle ultérieur. Lorsque l'on veut contrôler l'intégrité du message, avant de s'en servir, il suffit alors de faire vérifier par l'objet portatif que la signature calculée est bien égale à celle qui a été stockée de façon inaccessible, autrement que par les circuits de traitement, dans la mémoire de l'objet portatif.

Une valeur d'initialisation VI peut être constituée par une valeur contenue dans l'objet portatif, par exemple par le numéro de série de celui-ci. Il peut également s'agir d'un code confidentiel, qui est entré par la personne lançant le calcul de la signature qui doit être mémorisée, et qui sera par la suite fourni aux autres utilisateurs susceptibles d'avoir à effectuer une vérification de l'intégrité du message. Enfin, la valeur d'initialisation VI peut être constituée par le contenu d'un registre mémoire particulier de l'objet portatif, dont le contenu est identique à chaque utilisation de l'objet portatif. La valeur VI peut encore être un nombre aléatoire déterminé par les circuits de traitement au moment du calcul des signatures avant leur mémorisation, et qui est par la suite mémorisé en même temps que les signatures.

Le mode de mise en oeuvre illustré par la figure 2 n'est qu'un exemple, et il est bien entendu que l'on peut utiliser l'algorithme différemment, et que l'on peut se passer de l'utilisation d'une valeur d'initialisation, ainsi que de la clé secrète K, ou bien que l'on peut utiliser des fonctions autres que la fonction OU EXCLUSIF qui a été envisagée.

Dans la mémoire d'un objet portatif destiné à la vérification de l'intégrité d'un message est contenue au moins une signature S, et l'objet portatif comporte par ailleurs des circuits de traitement, tels qu'un processeur, et un algorithme de transformation A. L'objet portatif est agencé de façon à ce que le message à vérifier puisse être adressé au circuit de traitement de l'objet portatif. Eventuellement, l'objet portatif contient aussi une clé secrète K, et une signature est dans ce cas le résultat d'un chiffrement.

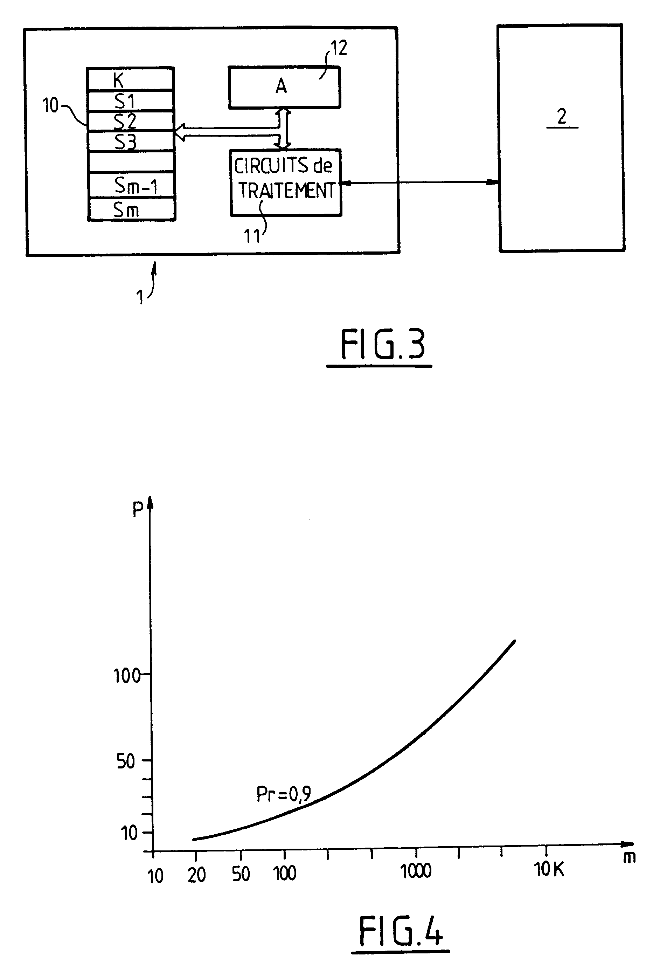

La figure 3 illustre une variante perfectionnée d'un objet portatif 1 qui contient dans sa zone de mémoire non volatile 10 et accessible par les seuls circuits de traitement 11 de l'objet, plusieurs signatures S1, S2 ... Sm, de même qu'une clé secrète unique K. Chaque signature est en fait la signature d'un message différent, et a été obtenue à partir de la même clé secrète K. On peut avoir cette configuration lorsqu'un même fournisseur de logiciels procure plusieurs logiciels à un même utilisateur. Dans ce cas, la signature de chacun des logiciels peut être stockée dans le même objet portatif.

Par ailleurs, l'algorithme A est mémorisé dans une autre zone 12 de l'objet.

Ce peut être encore le cas lorsqu'un utilisateur, qui désire se protéger, utilise un objet portatif spécifique qui contient au départ une clé secrète K, et dans lequel il fait mémoriser la signature de chacun des logiciels et/ou supports de données dont il dispose.

Dans un tel cas, où un même objet portatif contient les signatures de plusieurs messages, il faut que chaque signature soit associée à des moyens pour identifier le message d'origine, afin qu'au moment d'une vérification de signature, les circuits de traitement de l'objet portatif sachent retrouver dans sa mémoire la signature du message d'origine sensé correspondre au message à vérifier. Pour ce faire, par exemple, un numéro d'ordre, ou bien encore un identifiant différent, est associé à chaque message d'origine, au moment du précalcul d'une signature en vue de sa mémorisation. Une donnée en correspondance avec ce numéro d'ordre ou cet identifiant est mémorisée dans l'objet portatif au moment où la signature correspondante est mémorisée, de sorte que les circuits de traitement de l'objet portatif sont en mesure de faire la corrélation entre une donnée d'identification et la signature correspondante.

Le numéro d'ordre, ou l'identifiant, peut être soit déterminé par l'utilisateur qui désire effectuer le précalcul d'une signature en vue de sa mémorisation, soit par les circuits de traitement de l'objet portatif lui-même.

Il est bien entendu qu'un objet portatif ne peut pas être utilisé seul, et que dans ce cas, comme dans toutes les variantes qui seront illustrées par la suite, il doit être couplé, par l'intermédiaire de circuits de couplage et/ou d'interface, avec un système 2 plus vaste, et notamment avec le système de traitement de données dans lequel le message d'origine (logiciel ou données) va être exploité. Ce système de traitement de données est généralement une partie d'un ordinateur et comporte au moins un clavier, et des moyens d'impression et/ou de visualisation. Les circuits de couplage et/ou d'interface permettent d'établir un dialogue entre les circuits de traitement de l'objet portatif et les circuits de traitement du système plus vaste.

Dans le cas où c'est l'utilisateur qui détermine le numéro d'ordre ou l'identifiant d'un logiciel, il le rentre alors dans le système, par exemple, par l'intermédiaire du clavier du système de traitement plus large. Par contre, lorsque ce sont les circuits de traitement de l'objet portatif qui déterminent la donnée en correspondance, alors l'utilisateur est informé du numéro d'ordre ou de l'identifiant associé au message d'origine dont il vient de faire effectuer le précalcul de signature, suite à un dialogue qui s'est établi entre les circuits de traitement de l'objet portatif et ceux du système plus large, soit par les moyens de visualisation de ce système, soit par les moyens d'impression.

Quelle que soit la variante utilisée, l'utilisateur doit garder trâce, sur un support distinct, de l'identifiant ou du numéro d'ordre correspondant à un message d'origine donné, et doit l'indiquer au système, par l'intermédiaire du clavier, ou d'autres moyens d'entrée de données, au moment du calcul d'une signature pour vérification, de sorte que les circuits de traitement de l'objet portatif effectueront la comparaison de signature uniquement sur la signature sensée correspondre en mémoire.

Le calcul d'une signature, en vue de sa mémorisation dans les circuits de mémoire 10 d'un objet portatif, peut être effectué directement à partir des circuits de traitement 11 de l'objet portatif lui-même et de la clé secrète qu'il renferme éventuellement suite à sa fabrication, ce qui est très avantageux, puisque la signature peut être calculée sans jamais être divulguée à l'extérieur, car dès que les circuits de traitement ont terminé le calcul, ils effectuent la mémorisation de la signature. On peut également envisager que le premier calcul de signature, avant sa mémorisation, soit effectué par des circuits de traitement extérieurs à ceux de l'objet portatif et incorporés dans un système extérieur 2 auquel est susceptible d'être connecté l'objet portatif 1. Le système extérieur 2 est par exemple une unité de traitement du logiciel ou des données à vérifier. Ces circuits extérieurs mettent en oeuvre le même algorithme que celui contenu dans l'objet portatif. Dans un tel cas, si les calculs utilisent une clé secrète , celle-ci peut être déterminée au moment du calcul de chaque signature, puis mémorisée en même temps que cette dernière, ou bien encore la clé secrète peut être prélevée à l'intérieur de l'objet portatif, sous contrôle des circuits de traitement qu'il incorpore, puis transmise aux circuits extérieurs, en vue du calcul de la signature avant stockage de cette dernière. Cette solution présente cependant l'inconvénient qu'il faut transmettre la clé secrète à l'extérieur et qu'il faut donc par la suite la faire disparaître des circuits de traitement extérieurs après calcul de la signature. Cette solution est cependant avantageuse lorsque les logiciels, de taille plus importante, nécessitent des temps de traitement assez importants pour le calcul des signatures. En effet, le temps de traitement de l'unité centrale du microprocesseur peut constituer un obstacle à l'utilisation du procédé, dans la mesure où la signature est calculée sur la base de la totalité du message constituant le logiciel et/ou les données. En effet, pour un logiciel de un mégaoctet, il est nécessaire de disposer de plus d'une heure de calcul avant d'obtenir le résultat du calcul de signature, et par conséquent le résultat de la vérification, car les circuits de traitement incorporés dans les objets portatifs usuels, tels que les cartes à microcircuits, ont des temps de traitement nettement inférieurs aux temps de traitement des ordinateurs plus puissants.

Des temps de traitement élevés lors de la vérification peuvent s'avérer absolument inacceptables pour une utilisation fréquente. C'est pourquoi, dans une variante, on propose un processus de contrôle beaucoup plus rapide que le précédent, utilisable dans tous les cas de figure. Pour ce faire, le message est découpé préalablement en un certain nombre de parties ou modules M1, M2 ... Mm, et à chaque module on associe une signature S1, S2, S3 ... Sm, et chaque signature est mémorisée dans une zone secrète différente d'un même objet portatif. Selon la taille du message pour lequel on effectue le calcul de signature S1, S2, S3 ... Sm, avant leur stockage, on choisit de faire effectuer le calcul, soit par les circuits de traitement de l'objet portatif, dans le cas où le message n'est pas de taille trop importante, ou bien, si la taille nécessite un temps de calcul trop élevé, alors on fait effectuer les calculs par des circuits de traitement plus rapides, par exemple ceux d'un ordinateur auquel est accouplé l'objet portatif pendant la phase de calcul des signatures.

Il faut cependant noter que, lors de la phase de calcul des signatures, en vue de leur stockage dans la mémoire 10 de l'objet portatif, le temps de calcul n'est pas critique, de sorte qu'afin d'éviter de divulguer la clé secrète à l'extérieur, on préfère la solution consistant à faire effectuer le calcul par les circuits 11 de traitement de l'objet portatif lui-même.

On constate donc que l'ensemble du message a servi de base à l'élaboration d'un certain nombre de signatures, de sorte que tous les bits constitutifs du message ont été pris en compte. Dans un tel cas, il est possible d'utiliser plusieurs processus pour contrôler l'intégrité du message ayant ainsi servi de base à l'élaboration de plusieurs signatures.

Une première méthode consiste à faire choisir au hasard plusieurs p modules différents parmi l'ensemble des m modules qui représentent la totalité du logiciel à contrôler. Le nombre p peut être prédéterminé et constant lors de chaque vérification, les circuits de traitement se contentant de choisir des modules différents pour une vérification, et étant agencés pour avoir cette possibilité que les modules choisis d'une vérification à l'autre soient éventuellement différents.

Afin de déterminer des modules, les circuits de traitement de l'objet portatif utilisent le même processus que celui qui a été utilisé pour déterminer les m modules ayant servi au calcul initial des m signatures. Ainsi, si lors du calcul initial le message a été découpé en modules de k bits, alors au moment de la vérification des signatures, les circuits de traitement de l'objet portatif redécoupent le message qu'ils reçoivent en modules de k bits, et choisissent aléatoirement parmi ces modules un nombre p de modules pour lesquels la vérification de la signature va être effectuée. Les circuits de traitement de l'objet portatif effectuent alors le calcul des signatures des p modules choisis et les comparent aux signatures qui sont sensées correspondre dans la mémoire de la carte.

La comparaison peut être effectuée au coup par coup, c'est-à-dire que dès que la carte a effectué le recalcul d'une signature, elle vérifie la concordance ou non de cette signature avec la signature sensée correspondre dans la mémoire, ou bien encore l'ensemble des signatures recalculées peut être stocké dans une mémoire tampon, puis la comparaison a lieu après que les p signatures aient été récalculées.

Dès lors que les circuits de traitement de l'objet portatif détectent une différence entre une signature recalculée, et la signature sensée correspondre en mémoire de l'objet portatif, alors le message est jugé non intègre, et des moyens associés au circuit de traitement, tel que des moyens d'affichage du système auquel l'objet portatif est connecté, indiquent le résultat positif ou négatif de la comparaison.

Ainsi, à titre d'exemple, si le message d'origine a été découpé en modules de huit bits, le premier module étant constitué par les huit premiers bits du message, le second module étant constitué par les huit bits suivant, et ainsi de suite, la signature enregistrée du premier module correspond au chiffrement des huit premiers bits, et la signature du second module correspond au chiffrement du neuvième au seizième bit du message initial. Si, lors de la vérification de signature, les circuits de traitement décident de vérifier la signature du deuxième module, alors les circuits de traitement prennent en compte la deuxième série de huit bits du message dont il faut vérifier l'intégrité, recalculent la signature de cette deuxième série de huit bits du message à vérifier en appliquant l'algorithme A sur cette série de huit bits, et en appliquant éventuellement une clé secrète K si elle a été utilisée lors du calcul avant mémorisation, et la signature stockée dans la mémoire de l'objet portatif, correspondant au deuxième module initial, est comparée à la signature recalculée du module sensé correspondre.

Bien entendu, si les p signatures recalculées sont correctes, bien que la vérification ne soit pas survenue sur les m signatures initialement calculées, puis stockées dans la mémoire de l'objet portatif, le système considère cependant que le logiciel peut être jugé intègre, et le résultat positif de la comparaison est indiqué.

Le nombre p de modules sur lesquels l'objet portatif doit effectuer la vérification des signatures peut être prédéterminé, les modules vérifiés pouvant par contre être différents d'une vérification à l'autre. Le nombre p de modules à vérifier est indiqué aux circuits de traitement de l'objet portatif, et il est choisi de façon que l'exhaustivité du contrôle soit suffisante pour atteindre un niveau de confiance acceptable. En effet, puisque l'on vérifie p signatures au lieu des m signatures d'origine, on réduit le temps de calcul nécessaire à la vérification de façon conséquente par rapport au temps de calcul qui avait été nécessaire pour mémoriser la totalité des signatures.

Egalement, le nombre p de modules peut ne pas être prédéterminé par avance, mais il peut être choisi de façon aléatoire par les circuits de traitement de l'objet portatif. Dans ce cas, il faut prévoir une vérification de la valeur du nombre p calculé, pour éviter que la vérification porte sur un nombre trop faible de modules, de sorte que la validité du contrôle ne serait pas suffisante. Par ailleurs, il ne faut pas que le nombre p soit trop élevé, afin que les temps de traitement demeurent néanmoins acceptables.

La figure 4 présente une courbe qui permet d'apprécier le nombre p de modules qu'il faut contrôler, en fonction du nombre total m de modules que contient le message, pour obtenir une probabilité Pr égale à 0,9, c'est-à-dire qu'elle présente le nombre de modules qu'il faut contrôler pour que l'on ait neuf chances sur dix de découvrir une altération du message, dans le cas où de plus, le message contient un nombre q de modules altérés équivalent au nombre p de modules contrôlés. On constate ainsi que pour un logiciel contenant mille modules, dont une soixantaine environ seraient altérés, il faut contrôler soixante modules pour avoir neuf chances sur dix de découvrir une altération du message.

En d'autres termes, ceci signifie que si on effectue la vérification d'un soixantaine de signatures de modules, pour un message contenant mille modules, et que moins de soixante modules ont été altérés, alors la probabilité de découvrir une altération à l'issue de ces soixantes contrôles est supérieure à 9/10, et a contrario, elle diminue si le nombre de modules altérés est supérieur.

Afin de déterminer le nombre p de modules qu'il faut vérifier, il faut donc effectuer un compromis entre le nombre q de modules susceptibles d'être altérés et le nombre total n de modules que contient le message.

En supposant que chaque module est repérable par un numéro d'ordre, comme ceci a été exposé précédemment, le choix aléatoire des p modules, sur lesquels la vérification de signature va être effectuée, peut consister à faire élaborer par les circuits de traitement de l'objet portatif p nombres aléatoires différents déterminant chacun le numéro d'ordre du module choisi.

Ainsi, en supposant que l'on désire effectuer quatre vérifications, dans un ensemble de m modules, les circuits de traitement de l'objet portatif effectueront quatre tirages au sort de nombres inférieurs ou égaux à m, différents entre eux. Si, par exemple, le calcul donne les nombres 2, 4, j, m-1, alors les circuits de traitement de l'objet portatif effectueront le calcul des signatures des seconds, quatrième, jème, m-1ème modules du message dont il faut vérifier l'intégrité, et iront les comparer aux deuxième, quatrième, jème, m-1ème signatures mémorisées dans la mémoire de l'objet portatif.

A la suite de la comparaison, les circuits de traitement de l'objet portatif agiront sur des moyens permettant d'indiquer si une différence, ou bien encore une similitude a été détectée lors des différentes comparaisons.

Dans une variante, pour déterminer quels modules devront faire l'objet d'une vérification de signature, on fait calculer aux circuits de traitement de l'objet portatif un nombre binaire (a), de longueur m, c'est-à-dire qui comporte un nombre de bits égal au nombre de modules constituant le message. Par ailleurs, on fait en sorte que le nombre binaire soit issu d'un code p parmi m, c'est-à-dire qu'il comporte un certain nombre de bits p dans un état logique déterminé, alors que les m-p bits restant sont dans un état logique complémentaire. Ainsi, par exemple, si l'état initial des bits est l'état logique "0", la génération du nombre (a) fera que p bits soient dans un état différent de l'état de repos. Chaque bit pouvant être répéré par son numéro d'ordre dans l'ensemble des m bits, on choisira d'effectuer la vérification des signatures sur les modules dont le numéro d'ordre correspond au numéro d'ordre des bits passés à "1" dans le nombre binaire aléatoire (a).

D'autres possibilités encore peuvent être envisagées par l'homme du métier sans sortir pour autant du cadre de la présente invention, tel qu'il est défini par les revendications.

Les différentes variantes qui viennent d'être exposées peuvent s'avérer suffisantes et offrent un degré de sécurité satisfaisant pour déterminer avec de bonnes probabilités qu'un message a été altéré ou non. Cependant, on peut envisager d'autres variantes qui permettent d'améliorer la sécurité de la méthode.

Ces variantes perfectionnées sont réalisées en tenant compte du fait qu'une intrusion frauduleuse consiste généralement à modifier une séquence d'instructions voisines dans le programme, ou bien encore à introduire des séquences parasites assez localisées et servant peu souvent. C'est seulement lorsque le programme en cours de déroulement utilise ces instructions parasites que les effets dûs à leur présence peuvent s'avérer désastreux. Il peut en effet arriver que ces instructions parasites ne soient pas appelées par le programme en cours, sous certaines conditions d'utilisation, alors qu'elles le seront sous d'autres conditions.

C'est pourquoi, afin d'augmenter la probabilité de détection d'une modification locale extrêmement peu utilisée, dans une variante de mise en oeuvre, préalablement au calcul des signatures, l'algorithme mis en oeuvre dans les circuits de traitement de l'objet portatif est tel qu'il organise un découpage du message en blocs, indépendamment de leur contenu, et organise un entrelacement des blocs dans les calculs de signatures, de façon à rendre impossible toute modification cohérente du message. Un ensemble de blocs entrelacés forme un module.

On peut ainsi considérer que chaque mot binaire élémentaire, constituant le message, constitue un bloc. Dans un tel cas, si le format de travail des circuits de traitement est l'octet, chaque bloc sera constitué de huit bits.

Dans une variante, on considère qu'un bloc n'est pas constitué par un seul mot binaire, mais par exemple par plusieurs mots binaires consécutifs dans la suite du message. Ainsi, un premier bloc peut être constitué par exemple par les cent premiers mots binaires, c'est-à-dire les cent premiers mots du message dont on souhaite vérifier l'intégrité, et qui comportent chacun un nombre de bits déterminé, par exemple huit ou seize, ou tout autre valeur compatible avec les formats de travail des circuits de traitement de l'objet portatif, le second bloc étant constitué alors par les cent mots binaires suivant, et ainsi de suite jusqu'à la fin du message.

Bien entendu, il peut arriver que le nombre total de mots constituant le message ne permette pas de constituer un dernier bloc avec autant de mots binaires appartenant au message que les blocs précédents. C'est le cas lorsque le quotient du nombre total de mots constituant le message par le nombre de mots choisis pour constituer chaque bloc n'est pas un nombre entier. Dans un tel cas, le dernier bloc ne peut pas contenir un nombre de mots issu du message égal au nombre que contiennent les blocs précédents.

C'est par exemple le cas lorsqu'un message contient mille trente mots et que chaque bloc est constitué de cent mots. Il est ainsi possible de constituer dix blocs de cent mots et il reste seulement trente mots pour constituer le dernier bloc. Dans un tel cas, le dernier bloc est constitué à l'aide de ces trente mots restant auquels on ajoute par exemple soixante-dix mots de valeur binaire nulle, c'est-à-dire constitués exclusivement par des "0".

Pour éviter cet artifice, on peut faire en sorte que le nombre de mots constituant chaque bloc soit un diviseur exact du nombre de mots constituant le message, de sorte que l'ensemble des blocs ne contiendra que des mots issus du message d'origine. Cette solution présente l'inconvénient qu'il est nécessaire que les circuits de traitement comptabilisent le nombre total de mots constituant le message, préalablement à la constitution des blocs, pour déterminer quel nombre de mots devra constituer chaque bloc. Préalablement, il faut donc que les circuits de traitement sachent quel est le nombre optimal de mots pour constituer chaque bloc, et si ce nombre optimal ne constitue par un diviseur du nombre total de mots constituant le message, les circuits de traitement doivent déterminer quel est le diviseur de valeur inférieure qu'il faut employer. On conçoit donc que cette solution est un peu plus lourde et difficile à mettre en oeuvre ; elle est cependant envisageable.

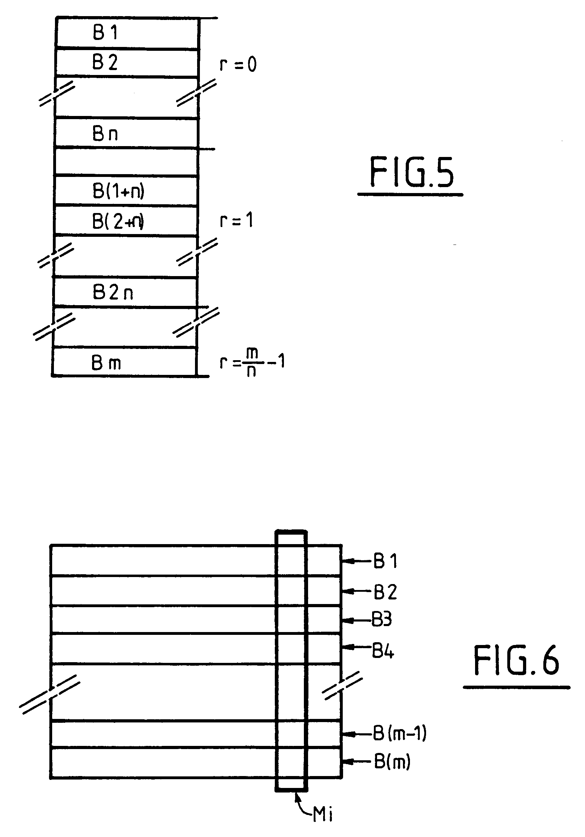

La figure 5 permet d'illustrer la façon de comprendre comment les blocs sont répartis à l'intérieur du message, et comment les circuits de traitement effectuent le calcul des premières signatures, ou bien encore les circuits de traitement de l'objet portatif, lorsqu'ils exécutent les calculs de vérification, les entrelacent.

Sur la figure 5, on a représenté un ensemble m blocs numérotés de b1 à bm. Chaque bloc peut être constitué, comme décrit précédemment, par un seul mot binaire, ou par plusieurs mots binaires associés les uns aux autres. En associant un nombre déterminé de blocs entre eux, on obtient un module qui peut, par la suite, servir de base au calcul d'une signature, comme on l'a décrit auparavant.

Si le message P est découpé en m blocs numérotés de B1 à Bm, il y a possibilité de constituer m/n modules, de n blocs chacun tels que le module Mi de rang i, soit constitué par les blocs de rang i, i + n, i + 2n, et ainsi de suite, jusqu'à i + rn avec 1 ≦ i ≦ n et 0 ≦ r ≦ m/n -1.

Ainsi, le premier module serait constitué par les blocs B1, B1 + n, B1 + 2n, ... , B1 + rn accolés les uns aux autres.

La détermination du nombre n doit être faite de façon que les temps de calcul et de vérification de signatures ne soient pas trop longs d'une part, et d'autre part, pour que chaque module contienne, autant de possible, exclusivement des informations issues du message d'origine, ou du message à vérifier.

En effet, si n n'est pas un diviseur exact du nombre de blocs, certains modules pourraient contenir des informations autres que les informations relatives aux messages sur lesquels il faut effectuer le calcul des signatures. Il faudrait en effet compléter certains modules, par exemple avec des "0" ou des "1" binaires.

C'est pourquoi, de préférence, le nombre n de blocs constituant chaque module est choisi de façon que n soit un diviseur du nombre total de blocs constituant le message.

Indépendamment du nombre de mots constituant chaque bloc, ou du nombre de blocs constituant chaque module, on voit que l'imbrication des blocs dans les modules et que les signatures sont totalement indépendantes de la structure même du message, ce qui est particulièrement important dans le cas où le message est un logiciel sur lequel on veut effectuer des vérifications d'intégrité. En effet, la modification d'une partie du message, en raison de cette imbrication, est susceptible d'apparaître au travers de plusieurs signatures, de sorte que l'on augmente la probabilité de détecter les modifications, puisque par rapport à leur état d'origine, plusieurs modules sont susceptibles de subir des modifications. Il y a donc, en quelque sorte, une diffusion des modifications dans l'ensemble ou dans une partie non négligeable des modules. Cette disposition permet donc de réduire le nombre de calculs de signatures de vérification, par rapport à la disposition selon laquelle on considérait que chaque module était constitué par un certain nombre de blocs se suivant dans l'ensemble du message.

Une autre façon de constituer les modules, illustrée par la figure 6 consiste, d'une façon semblable à ce qui a été fait précédemment, à découper l'ensemble du message en blocs, B1, B2, B3 ... Bm, possédant chacun un nombre déterminé de bits ou de mots. Le bloc B1 est par exemple constitué par les k premiers mots binaires du message, le bloc B2 est constitué par les k mots suivant, et ainsi de suite jusqu'à la fin. Là encore le nombre k est choisi, par exemple, pour être un diviseur du nombre de mots constituant le message, de façon que le dernier mot constitué lors de l'arrangement en vue du calcul des signatures avant mémorisation dans l'objet portatif soit constitué exclusivement de mots appartenant au message d'origine, et que l'on ne soit pas obligé par un artifice de finir le bloc avec des informations non significatives.

Chaque bloc comporte donc un nombre déterminé de bits, chacun de ces bits étant repérable par son rang à l'intérieur du bloc, et la constitution d'un module consiste à associer un ou plusieurs bits de rangs déterminés d'un bloc avec le ou les bits de mêmes rangs dans les autres blocs, puis le processus de calcul des signatures peut avoir lieu en utilisant les modules ainsi constitués.

Ainsi, en supposant que l'on prenne un bit dans chaque bloc pour constituer les modules, un premier module serait constitué par le premier bit du premier bloc, par le premier bit du second bloc, et ainsi de suite jusqu'au premier bit du dernier bloc constituant le message. Un second module serait constitué par le second bit du premier bloc, le second bit du second bloc, et ainsi de suite.

Chaque module est donc constitué par une chaîne d'informations transversale du message considéré, et il devient dès lors très difficile qu'une modification cohérente d'une partie du message passe inaperçue lors du recalcul des signatures, quel que soit le nombre de signatures recalculées et comparées par rapport au nombre initial de signatures. En effet, généralement les instructions s'il s'agit d'un logiciel, ou bien encore des données, sont écrites successivement de façon longitudinale, et la moindre modification cohérente du programme ou des données se traduirait par une chaîne transversale différente quasiment impossible à maîtriser simultanément. Par ailleurs, cette solution permet de réduire encore plus le nombre de signatures qu'il faut recalculer et comparer aux signatures correspondantes d'origine lors de la vérification du message.

Plutôt que de choisir une chaîne transversale, telle qu'elle a été définie précédemment, on peut constituer un module à l'aide d'une chaîne d'informations pseudo-transversale qui prend un nombre déterminé de bits dans chaque bloc, au moment du calcul de chaque signature avant leur mémorisation, de façon aléatoire. Ainsi, il est possible de prendre le premier bit du premier bloc et de l'associer au dernier bit du second bloc, puis de l'associer à un bit de rang différent du troisième et ainsi de suite. Bien entendu, une telle association nécessite l'utilisation d'un nombre aléatoire de référence, par exemple tiré au moment du calcul de la signature avant mémorisation. Ce nombre aléatoire de référence est pris en compte par les circuits de traitement, pour déterminer quelle suite de bits il faut considérer, et doit être mémorisé dans les circuits de mémoire de l'objet portatif, de façon à ce qu'au moment d'une vérification, les circuits de traitement puissent savoir comment ils doivent refaire la répartition pour constituer des modules à partir du message sur lequel la vérification doit porter.

En outre, tout autre type de variante pour l'entrelacement des blocs afin de constituer des modules, ou pour l'entrelacement des mots, voire même des bits, afin de constituer des blocs, peut être envisagée. En particulier, plutôt que de suivre une suite logique pour l'entrelacement des mots ou des blocs entre eux, on peut envisager que l'entrelacement des mots, afin de constituer un bloc, ou des blocs afin de constituer un module, puisse se faire de façon aléatoire. A cet effet, par exemple, les circuits de traitement, avant de constituer les modules, en vue du calcul de leur signature pour mémorisation, devront déterminer comment sont reconstitués les modules, et il faudra mémoriser les paramètres utilisés pour constituer les modules, afin de pouvoir faire les vérifications ultérieures. Ainsi, on peut considérer que les circuits de traitement élaborent une suite de n nombres aléatoires, n correspondant au nombre de blocs qui constituera chaque module, le message contenant un nombre m de modules, et la suite de nombres aléatoires V1, V2, V3 ... Vn, permet de déterminer, à partir d'un bloc qui constituera le premier bloc d'un module, quels sont les autres blocs constitutifs de ce module.

Dans ce cas, également, il faut garder trâce de la suite de nombres aléatoires qui ont été utilisés pour pouvoir reconstituer des modules à partir du message sur lequel il faut effectuer la vérification.

Bien que l'emploi d'une clé secrète soit préférable, afin de sécuriser la vérification, il existe cependant des cas où cet emploi n'est pas nécessaire, que le message soit découpé en modules ou non et serve à l'élaboration d'une ou de plusieurs signatures distinctes. Elle procure seulement une plus grande sécurité, car elle évite que deux objets portatifs différents, utilisés pour le calcul des signatures d'un même message, enferment des signatures identiques, puisque la clé secrète contenue dans chacun des objets portatif est différente. Elle permet donc de limiter les risques de fraude au cas où un fraudeur observerait ce qui se passe avec un message tel qu'un logiciel, et chercherait à tromper les moyens de vérification de signatures. L'emploi d'une clé secrète est important notamment lorsque le logiciel doit être transféré d'une personne à une autre par exemple. Cependant, lorsque le calcul de la ou des signatures d'un message est requis par un utilisateur final, en vue de leur mémorisation, pour une vérification ultérieure, il n'est pas nécessaire que l'objet portatif servant à la vérification contienne une clé secrète. La signature du message peut être obtenue par une simple transformation des données qu'il contient, prises dans leur ensemble, ou bien encore prises par modules distincts, à l'aide d'un algorithme, de sorte que chaque signature est une simple image des données qui ont servi à la calculer. En effet, dans le cas où c'est un utilisateur final qui souhaite pouvoir vérifier l'intégrité de son support de données, au fur et à mesure de ses utilisations, il n'y a aucun intérêt à ce qu'il cherche à tromper le système. Dans un tel cas, une signature peut résulter d'une simple compression d'informations.

Le calcul d'une signature portant sur un message ou une partie de message serait seulement fonction de ce message ou de cette partie de message auquel on ferait subir l'algorithme considéré.

Un objet portatif pour le calcul des signatures en vue de leur vérification ne comprendra donc plus, comme c'est le cas sur la figure 3 une zone 10 de mémoire incorporant la clé secrète K, mais par contre il pourrait contenir une ou plusieurs zones 10 de mémoire contenant chacune une signature S1 , S2, Sm, de même qu'il comprendrait un processeur avec des circuits 11 de traitement pour la mise en oeuvre d'un algorithme A.

En conséquence, la génération d'une signature, telle qu'elle a été décrite en regard de la figure 2, ne tiendrait plus compte de l'emploi de la clé secrète K lors de chaque opération intermédiaire nécessitée par le calcul de la signature.

Un système pour la mise en oeuvre de l'invention comporte un objet portatif 1 comprenant au moins une zone mémoire 10 pour la mémorisation d'au moins une signature du logiciel, et des circuits de traitement 11 mémorisant un algorithme 12, pour au moins effectuer l'opération de recalcul des signatures, après qu'au moins une signature originale ait été inscrite. Le fait que le recalcul soit effectué à l'intérieur des circuits de traitement de l'objet portatif permet d'éviter à un observateur extérieur de voir la valeur de la signature recalculée, même si cet observateur a eu connaissance de la signature initialement calculée, en vue de son introduction dans la mémoire de l'objet portatif, lorsque ladite signature mémorisée avait été calculée par des circuits de traitement extérieurs à l'objet portatif, par exemple pour éviter d'avoir des temps de calcul trop importants.

Les circuits de traitement de l'objet portatif contiennent donc un algorithme ou programme de chiffrement A, pour au moins transformer un message M dont il convient de vérifier l'intégrité, et la mémoire peut en outre contenir une clé K, dans le cas où on veut conférer une plus grande sécurité encore. En outre, dans le cas où la mémoire de l'objet portatif contient un grand nombre de signatures appartenant chacune à un module différent d'un message initial, il convient que les circuits de traitement de l'objet portatif soient agencés de manière telle qu'ils peuvent effectuer la vérification sur un nombre limité de modules par rapport au nombre initial, afin de réduire les temps de calcul. Egalement, les circuits de traitement doivent être en mesure de reconstituer les modules du message à vérifier, de la même façon qu'ils ont été constitués lors du calcul des signatures et de leur mémorisation.

Bien entendu, la zone de mémoire dans laquelle les signatures sont mémorisées est une zone de mémoire non volatile.

Par ailleurs, comme indiqué précédemment, l'objet portatif 1 seul ne peut pas fonctionner, et il faut l'associer à d'autres moyens 2 pour constituer un système de mise en oeuvre du procédé de l'invention. Il faut en particulier constituer des circuits d'interface entre l'objet portatif, et l'ordinateur, ou le dispositif de traitement du logiciel ou des données dont il convient de vérifier l'intégrité. C'est par l'intermédiaire de ce dispositif de traitement ou de cet ordinateur, que les informations à vérifier, de même que les informations constituant le message d'origine sont exploitées dans l'objet portatif, suite à un dialogue s'établissant entre les circuits de traitement de l'objet portatif et les circuits de traitement du dispositif de traitement associé. Entre autre, le clavier qui existe généralement sur les dispositifs de traitement, ou d'autres moyens d'introduction de données (souris, écran tactile, etc) peuvent être utilisés pour établir le dialogue avec l'objet portatif, notamment lorsqu'il s'agit de rentrer des clés confidentielles d'accès, ou bien encore des identifiants correspondant aux messages dont il convient de vérifier l'intégrité par rapport à des messages d'origine.

Les circuits d'interface peuvent être directement incorporés dans le dispositif de traitement ou l'ordinateur, ou bien ils peuvent être placés à l'extérieur, et connectés par l'intermédiaire d'une liaison. Bien entendu, un connecteur est prévu entre l'objet portatif et les circuits d'interface ou de couplage.

Lorsque le système est utilisé pour une vérification, dans le cas où une seule signature portant sur la totalité du message original a été mémorisée, les circuits de traitement de l'objet portatif prélèvent la totalité du message dont il convient de vérifier l'intégrité, et calculent la signature de ce message à vérifier, en mettant en oeuvre l'algorithme qu'ils contiennent, puis vérifient la concordance ou non entre la signature stockée et la signature recalculée. Ceci est applicable dans le cas de messages de faible longueur.

Par contre, lorsque le message initial a été découpé en plusieurs modules, car sa longueur est relativement importante, et qu'en conséquence plusieurs signatures ont été mémorisées dans la mémoire de l'objet portatif, alors les circuits de traitement de ce dernier déterminent, dans la mesure où ceci n'est pas prédéterminé, un nombre p de modules devant faire l'objet d'une vérification de signatures, de même que leur numéro d'ordre. Ils reconstituent alors les modules devant faire l'objet d'une vérification de signatures, à partir de leur numéro d'ordre, de la même façon que les modules qui sont sensés correspondre dans le message original avaient été constitués lors du précalcul de toutes les signatures.

De préférence, afin d'éviter qu'un fraudeur puisse savoir sur quelle partie du message le calcul des signatures de vérification est effectué, l'ensemble du message est prélevé par les circuits de traitement de l'objet portatif, et c'est seulement à l'intérieur de celui-ci que s'effectue le tri. Bien entendu, dans la mesure où le message peut avoir une longueur très importante, nettement supérieure à la capacité de mémoire de l'objet portatif, les circuits de traitement peuvent se contenter de lire au passage les données constitutives du message à vérifier, et de ne tenir compte que des données pouvant servir de base aux signatures à vérifier.

Egalement, comme il a été évoqué précédemment, une même carte peut contenir les signatures associées à plusieurs logiciels. Afin de pouvoir distinguer ces signatures, on peut prévoir dans l'objet portatif une zone de contrôle contenant des informations relatives à l'identité de chaque logiciel dont au moins une signature a été mémorisée, cette zone de contrôle indiquant en outre aux circuits de traitement à quelles adresses en mémoire se situent les signatures relatives à un message d'origine donné. Il peut s'agir d'un numéro d'ordre, ou bien encore de tout autre type d'information permettant de repérer quel message doit faire l'objet d'une comparaison. Dans un tel cas, au moment d'une vérification, il est prévu que le système demande à l'utilisateur le numéro ou l'identité du message devant faire l'objet de la vérification.

Enfin, dans une variante perfectionnée, on prévoit que dans le cas où le message est modifié de façon volontaire en vue d'une mise à jour, alors une mise à jour de chaque signature correspondante mémorisée dans l'objet portatif, puisse avoir lieu. Dans ce cas, sous contrôle de l'utilisateur, une réinscription complète des nouvelles signatures correspondant au message modifié peut avoir lieu, soit dans une autre zone de la mémoire de l'objet portatif, soit dans la même zone, qui est alors par exemple de type EEPROM, c'est-à-dire qu'elle est effaçable et reprogrammable électriquement sous contrôle des circuits de l'objet portatif. Ceci est totalement à la portée de l'homme de l'art, puisque des objets portatifs du type cartes à mémoire et microcircuits électroniques incorporent généralement des mémoires de ce type, et il peut être prévu au niveau des bornes de contact entre ces objets portatifs et un sytème extérieur, en plus des bornes nécessaires à l'alimentation et au transfert des données, une borne nécessaire à la programmation ou à l'effacement de certaines zones de mémoire. Dans d'autres cas, les tensions de programmation sont fournies par l'objet portatif lui-même. Cependant, dans chaque cas, l'effacement et la réinscription de nouvelles signatures en mémoire s'effectuent de façon sélective, et n'affectent que les zones qui doivent être modifiées.

L'invention est donc particulièrement avantageuse, car elle permet d'une façon simple, sûre et relativement peu coûteuse de s'assurer de l'intégrité d'un message constitué par un logiciel et/ou par des données mémorisés sur un support informatique. Il peut s'agir de messages qui ont été chargés à partir d'un original et qui ont été modifiés, soit suite à une intrusion sur le site même où elles se trouvent, soit à distance, par l'intermédiaire d'une ligne de transmission.

Il est bien entendu que des modifications peuvent être apportées au procédé et au système pour sa mise en oeuvre, sans qu'elles sortent pour autant du cadre de la présente invention, tel qu'il est défini par les revendications.

## Revendications

1. Procédé pour vérifier l'intégrité, par rapport à un message original, d'un message subséquent contenant des informations, consistant à faire calculer par des moyens de traitement une signature à partir du message original (M) auquel on applique un algorithme (A), caractérisé en ce qu'il comprend les étapes consistant à :
- diviser le message original en un nombre total (m) de modules (M1, M2... Mm) ;
- utiliser les dits moyens de traitement pour appliquer le dit algorithme (A) à chaque module du message original pour calculer une signature respective (S1, S2,... Sm) de chaque module ;
- utiliser un objet portatif électronique possédant des circuits de traitement (11) et des moyens de mémorisation incluant une zone de mémoire protégée non volatile (10) accessible seulement par les dits circuits de traitement, et mémoriser les dites signatures dans la zone de mémoire protégée et le dit algorithme dans les moyens de mémorisation ;
et vérifier les messages subséquents dans l'objet portatif par les étapes consistant à :
- sélectionner, dans les messages subséquents, un nombre partiel (p) de modules inférieur au nombre total (m) de modules, le dit nombre partiel étant tel que la probabilité de détecter une altération dans le message subséquent, en considérant seulement le dit nombre partiel de modules, a une valeur déterminée ;
- utiliser les circuits de traitement pour appliquer le dit algorithme à chaque module sélectionné de façon à calculer une signature respective ;
- sélectionner dans la zone de mémoire protégée les signatures des modules du message original qui correspondent aux modules sélectionnés du message subséquent et comparer ces signatures avec celles du message subséquent ; et
- faire envoyer par l'objet portatif une réponse indiquant si l'intégrité entre les messages original et subséquent est confirmée, c'est-à-dire si les dites signatures du message original correspondent respectivement à celles du message subséquent.

2. Procédé selon la revendication 1 caractérisé en ce que les modules sont repérés par un numéro et, pour déterminer le numéro des modules sur lesquels va porter la vérification de signatures, les circuits de traitement de l'objet portatif effectuent (p) tirages successifs de nombres aléatoires différents, chaque nombre aléatoire déterminant le numéro d'un module sur lequel doit porter la vérification.

3. Procédé selon la revendication 2 caractérisé en ce que, pour déterminer le numéro des modules sur lesquels doit porter la vérification de signatures, parmi les (m) modules que contient le message d'origine, les circuits de traitement de l'objet portatif effectuent un tirage d'un nombre binaire (a) de longueur (m) exprimée en bits de sorte que la longueur du nombre aléatoire tiré est directement représentative du nombre de modules que contient le message d'origine, et en ce que la valeur du nombre aléatoire est issue d'un code (p) parmi (m), c'est-à-dire que parmi les (m) bits que contient le nombre aléatoire, il en existe (p) ayant une certaine valeur binaire (1 ou 0), alors que les (m - p) bits restant sont à la valeur complémentaire, et en ce que chaque bit du nombre aléatoire pouvant être repéré par un numéro d'ordre différent, le numéro des modules sur lesquels doit porter les vérifications de signatures est déterminé par le numéro d'ordre des (p) bits pris parmi les (m) dans le nombre aléatoire.

4. Procédé selon la revendication 1 caractérisé en ce qu'un message est constitué d'une succession de bits repérables par leur numéro d'ordre ou leur adresse en fonction de la position qu'ils occupent dans le message, et en ce que les circuits de traitement élaborent les différents modules (M1, M2, ... Mm), à partir du message d'origine, afin de calculer la signature de chacun de ces modules, avant d'entraîner leur mémorisation par les moyens de mémorisation de l'objet portatif, de la façon suivante :
- chaque module est constitué en prélevant un cartain nombre de bits du message selon une règle prédéterminée et/ou une règle élaborée par les circuits de traitement de l'objet portatif, prenant en compte par exemple des éléments aléatoires, et la règle ayant servi à constituer chaque module à partir du message original est conservée dans l'objet portatif, de façon à reconstituer à partir d'un message à certifier les modules de ce message selon la même règle que celle qui a été utilisée pour la constitution des modules à partir du message d'origine.

5. Procédé selon la revendication 1 caractérisé en ce que le message étant organisé sous forme de mots binaires, contenant chacun un nombre déterminé de bits, une information constituant une instruction ou une partie d'instruction d'un logiciel, ou une donnée ou une partie de donnée, dont l'intégrité doit être préservée, pour le bon déroulement d'un programme mettant en oeuvre ces instructions et/ou données, la constitution des modules (M1, M2, ... Mm), en vue du calcul de leur signature d'au moins certains d'entre eux, en vue de la vérification de l'intégrité du message, consiste à faire effectuer par les circuits de traitement devant réaliser le calcul des signatures considérées, d'une part la constitution d'un certain nombre (n) de blocs (B1, B2, ... Bn), regroupant chacun un certain nombre d'informations, de sorte que chaque information ou partie d'information contenue dans un bloc peut être repérée par la position des bits qui constituent cette information ou partie d'information dans le bloc considéré, et en ce qu'il consiste, pour constituer un module déterminé, à faire prélever par les circuits de traitement, selon une règle déterminée, au moins un bit dans chacun des blocs.

6. Procédé selon la revendication 5, caractérisé en ce que le regroupement des informations, de façon à constituer des blocs, s'effectue en prélevant les informations dans l'ordre dans lequel elles apparaissent à la lecture du message.

7. Dispositif pour vérifier l'intégrité, par rapport à un message original, d'un message subséquent contenant des informations, agencé pour faire calculer par des moyens de traitement une signature (S) à partir du message original (M) auquel on applique un algorithme (A), caractérisé en ce qu'il comprend un objet portatif comprenant des moyens de connexion à un dispositif (2), tel qu'un ordinateur, susceptible d'exécuter le message, ledit objet portatif comprenant également des circuits de traitement (11) et des moyens de mémorisation incluant une zone de mémoire protégée non volatile (10) accessible seulement par les circuits de traitement, dans lequel :
- le message original (M) est divisé en un nombre total (m) de modules (M1, M2, ... Mm) et la zone de mémoire protégée mémorise une pluralité de signatures (S1, S2, ... Sm), chaque signature étant le résultat de l'application de l'algorithme (A) à un module prédéterminé du message original ;
l'objet portatif contenant l'algorithme (A) et étant agencé pour :
- sélectionner, dans le message subséquent, un nombre partiel (p) de modules inférieur au nombre total (m) de modules, le dit nombre partiel étant tel que la probabilité de détecter une altération dans le message subséquent, en considérant seulement le nombre partiel de modules, a une valeur déterminée ;
- utiliser les circuits de traitement pour appliquer le dit algorithme à chaque module sélectionné de façon à calculer une signature respective ;
- sélectionner dans la zone de mémoire protégée les signatures des modules du message original qui correspondent aux modules sélectionnés du message subséquent et comparer ces signatures avec celles du message subséquent ; et
- faire envoyer par l'objet portatif une réponse indiquant si l'intégrité entre les messages original et subséquent est confirmée, c'est-à-dire si les dites signatures du message original correspondent respectivement à celles du message subséquent.

## Patentansprüche

1. Verfahren zum Überprüfen der Integrität einer Informationen enthaltenden folgenden Nachricht in bezug auf eine ursprüngliche Nachricht, das darin besteht, mit Verarbeitungsmitteln ausgehend von der ursprünglichen Nachricht (M), auf die ein Algorithmus (A) angewendet wird, eine Kennung zu berechnen, dadurch gekennzeichnet, daß es die Schritte enthält, die darin bestehen, daß:
- die ursprüngliche Nachricht in eine Gesamtmenge (m) von Modulen (M1, M2, ... Mm) unterteilt wird;
- die Verarbeitungsmittel dazu verwendet werden, den Algorithmus (A) auf jeden Modul der ursprünglichen Nachricht anzuwenden, um eine jeweilige Kennung (S1, S2, ... Sm) jedes Moduls zu berechnen;
- ein tragbarer elektronischer Gegenstand verwendet wird, der Verarbeitungsschaltungen (11) sowie Speichermittel enthält, die eine nichtflüchtige, geschützte Speicherzone (10) enthalten, zu der nur die Verarbeitungsschaltungen Zugang haben, und die Kennungen in der geschützten Speicherzone und der Algorithmus in den Speichermitteln gespeichert werden;
die folgenden Nachrichten im tragbaren Gegenstand durch die Schritte überprüft werden, die darin bestehen, daß:
- in den folgenden Nachrichten eine Teilmenge (p) von Modulen gewählt wird, die kleiner als die Gesamtmenge (m) von Modulen ist, wobei die Teilmenge so beschaffen ist, daß die Wahrscheinlichkeit, bei ausschließlicher Betrachtung der Teilmenge von Modulen in der folgenden Nachricht eine Änderung festzustellen, einen bestimmten Wert beisitzt;
- die Verarbeitungsschaltungen dazu verwendet werden, den Algorithmus auf jeden gewählten Modul in der Weise anzuwenden, daß eine entsprechende Kennung berechnet wird;
- in der geschützten Speicherzone die Kennungen derjenigen Module der ursprünglichen Nachricht gewählt werden, die den gewählten Modulen der folgenden Nachricht entsprechen, und diese Kennungen mit denjenigen der folgenden Nachricht verglichen werden; und
- mittels des tragbaren Gegenstandes eine Antwort abgeschickt wird, die angibt, ob die Integrität zwischen der ursprünglichen und der folgenden Nachricht bestätigt wird, d.h. ob die Kennungen der ursprünglichen Nachricht jeweils denjenigen der folgenden Nachricht entsprechen.

2. Verfahren nach Anspruch 1, dadurch gekennzeichnet, daß die Module durch eine Nummer gekennzeichnet sind und daß die Verarbeitungsschaltungen des tragbaren Gegenstandes für die Bestimmung der Nummer derjenigen Module, auf die sich die Überprüfung der Kennungen erstrecken wird, (p) aufeinanderfolgende Ziehungen von verschiedenen Zufallszahlen ausführen, wobei jede Zufallszahl die Nummer eines Moduls bestimmt, auf den sich die Überprüfung erstrecken soll.

3. Verfahren nach Anspruch 2, dadurch gekennzeichnet, daß für die Bestimmung der Nummer derjenigen Module unter den zu der ursprünglichen Nachricht gehörenden (m) Modulen, auf die sich die Überprüfung der Kennungen erstrecken soll, die Verarbeitungsschaltungen des tragbaren Gegenstandes eine Ziehung einer Binärzahl (a) der Länge (m) ausführen, die durch Bits in der Weise ausgedrückt wird, daß die Länge der gezogenen Zufallszahl direkt die Anzahl der Module repräsentiert, die die ursprüngliche Nachricht enthält, und daß der Wert der Zufallszahl aus einem (p)-aus-(m)-Code abgeleitet wird, d.h., daß unter den (m) Bits, die die Zufallszahl enthält, (p) Bits vorhanden sind, die einen bestimmten Binärwert (1 oder 0) besitzen, während die (m-p) verbleibenden Bits den komplementären Wert besitzen, und daß, da jedes Bit der Zufallszahl durch eine andere Ordnungsnummer gekennzeichnet werden kann, die jeweilige Nummer der Module, auf die sich die Überprüfungen der Kennungen erstrecken sollen, durch die jeweilige Ordnungsnummer der (p) Bits bestimmt ist, die aus den (m) Bits in der Zufallszahl entnommen werden.

4. Verfahren nach Anspruch 1, dadurch gekennzeichnet, daß eine Nachricht aus einer Folge von Bits gebildet ist, die in Abhängigkeit von der Position, die sie in der Nachricht einnehmen, durch ihre Ordnungsnummer oder durch ihre Adresse gekennzeichnet werden können, und daß die Verarbeitungsschaltungen vor der Speicherung der verschiedenen Module (M1, M2, ...Mm) durch die Speichermittel des tragbaren Gegenstandes diese Module ausgehend von der ursprünglichen Nachricht auf die folgende Weise verarbeiten, um die Kennung jedes dieser Module zu berechnen:
- jeder Modul wird gebildet durch die Entnahme einer bestimmten Anzahl von Bits der Nachricht gemäß einer vorgegebenen Regel und/oder einer durch die Verarbeitungsschaltungen des tragbaren Gegenstandes erzeugten Regel, die beispielsweise die Zufallselemente berücksichtigt, wobei die Regel, die der Bildung jedes Moduls ausgehend von der ursprünglichen Nachricht gedient hat, im tragbaren Gegenstand gehalten wird, so daß ausgehend von einer zu bestätigenden Nachricht die Module dieser Nachricht gemäß derselben Regel wie diejenige, die für die Bildung der Module ausgehend von der ursprünglichen Nachricht verwendet worden ist, wiederhergestellt werden.

5. Verfahren nach Anspruch 1, dadurch gekennzeichnet, daß dann, wenn die Nachricht in Form von binären Worten organisiert ist, wovon jedes eine bestimmte Anzahl von Bits enthält, und wenn eine Information einen Befehl oder einen Teil des Befehls einer Software oder eine Dateneinheit oder einen Teil einer Dateneinheit bildet, deren Integrität für den guten Ablauf eines diese Befehle und/oder Dateneinheiten verwendenden Programms beibehalten werden soll, die Bildung der Module (M1, M2, ...Mm) im Hinblick auf die Berechnung der Kennung wenigstens von einigen von ihnen zur Überprüfung der Integrität der Nachricht darin besteht, daß die Verarbeitungsschaltungen, die die Berechnung der betrachteten Kennungen ausführen müssen, einerseits die Bildung einer bestimmten Anzahl (n) von Blöcken (B1, B2, ...Bn) ausführen, in welchen jeweils eine bestimmte Anzahl von Informationen zusammengefaßt ist, derart, daß jede Information oder jeder Teil einer Information, der in einem Block enthalten ist, durch die Position der diese Information oder diesen Teil einer Information bildenden Bits gekennzeichnet werden kann, und daß es darin besteht, daß für die Bildung eines bestimmten Moduls durch die Verarbeitungsschaltungen gemäß einer vorgegebenen Regel wenigstens ein Bit aus jedem der Blöcke entnommen wird, um einen bestimmten Modul zu bilden.

6. Verfahren nach Anspruch 5, dadurch gekennzeichnet, daß die Zusammenfassung der Informationen in der Weise, daß die Blöcke gebildet werden, durch Entnehmen der Informationen in derjenigen Reihenfolge erfolgt, in der sie beim Lesen der Nachricht auftreten.

7. Vorrichtung zum Überprüfen der Integrität einer Informationen enthaltenden folgenden Nachricht in bezug auf eine ursprüngliche Nachricht, wobei die Vorrichtung so beschaffen ist, daß sie durch Verarbeitungsmittel ausgehend von einer ursprünglichen Nachricht (M), auf die ein Algorithmus (A) angewendet wird, eine Kennung (S) berechnet, dadurch gekennzeichnet, daß sie einen tragbaren Gegenstand enthält, der seinerseits Mittel für den Anschluß an eine Vorrichtung (2) wie etwa einen Rechner, der die Nachricht verarbeiten kann, enthält, wobei der tragbare Gegenstand außerdem Verarbeitungsschaltungen (11) und Speichermittel enthält, die ihrerseits eine nichtflüchtige, geschützte Speicherzone (10) enthalten, zu der nur die Verarbeitungsschaltungen Zugang haben, wobei in der Vorrichtung:
- die ursprüngliche Nachricht (M) in eine Gesamtmenge (m) von Modulen (M1, M2,... Mm) unterteilt wird und die geschützte Speicherzone mehrere Kennungen (S1, S2, ... Sm) speichert, wobei jede Kennung das Ergebnis der Anwendung des Algorithmus (A) auf einen vorgegebenen Modul der ursprünglichen Nachricht ist;
wobei der tragbare Gegenstand den Algorithmus (A) enthält und so beschaffen ist, daß er:
- in der folgenden Nachricht eine Teilmenge (p) von Modulen, die kleiner als die Gesamtmenge (m) von Modulen ist, auswählt, wobei die Teilmenge derart ist, daß die Wahrscheinlichkeit, bei Betrachtung lediglich der Teilmenge der Module die Erfassung einer Veränderung in der folgenden Nachricht einen bestimmten Wert besitzt;
- die Verarbeitungsschaltungen dazu verwendet, den Algorithmus auf jeden ausgewählten Modul anzuwenden, um eine jeweilige Kennung zu berechnen;
- in der geschützten Speicherzone die Kennungen derjenigen Module der ursprünglichen Nachricht auswählt, die den gewählten Modulen der folgenden Nachricht entsprechen, und diese Kennungen mit denjenigen der folgenden Nachricht vergleicht; und
- durch den tragbaren Gegenstand eine Antwort abschickt, die angibt, ob die Integrität zwischen der ursprünglichen und der folgenden Nachricht bestätigt wird, d.h. ob die Kennungen der ursprünglichen Nachricht jeweils denjenigen der folgenden Nachricht entsprechen.

## Claims

1. Process for checking the integrity, against an original message, of a subsequent message containing information, consisting of causing processing means to calculate a signature from the original message (M) to which an algorithm (A) is applied, characterized in that it comprises the steps consisting of:
- dividing the original message into a total number (m) of modules (M1, M2..Mm);
- using said processing means to apply said algorithm (A) to each module of the original message to calculate a respective signature (S1, S2....Sm) of each module;
- using an electronic portable object having processing circuits (11) and memorizing means including a protected non-volatile memory area (10) accessible only by said processing circuits, and memorizing said signatures in the protected memory area and said algorithm in the memorizing means;
and checking the subsequent messages in the portable object by the steps consisting of:
- selecting, in the subsequent messages, a partial number (p) of modules less than the total number (m) of modules , said partial number being such that the probability of detecting an alteration in a subsequent message, by considering only the partial number of modules, has a given value;
- using the processing circuits to apply said algorithm to each selected module so as to calculate a respective signature;
- selecting, in the protected memory area, the signatures of the modules of the original message which correspond to the selected modules of the subsequent message and comparing these signatures with those of the subsequent message; and
- causing the portable object to send a response indicating whether the integrity between the original and subsequent messages is confirmed, i.e. whether said signatures of the original message correspond respectively to those of the subsequent message.

2. Process according to claim 1, characterized in that the modules are located by a number and, to determine the number of modules on which the signature check will be made, the processing circuits of the portable object make (p) successive choices of different random numbers, each random number determining the number of a module to be checked.

3. Process according to claim 2, characterized in that, to determine the number of modules on which the signature check will be made, from the (m) modules contained in the original message, the processing circuits of the portable object choose a binary number (a) of length (m) expressed in bits such that the length of the random number chosen is directly representative of the number of modules contained in the original message, and in that the value of the random number comes from a code (p) out of (m), i.e. of the (m) bits contained in the random number, there are (p) that have a certain binary value (1 or 0) while the remaining (m - p) bits have the complementary value, and that each bit of the random number can be located by a different serial number; the number of modules to be signature-checked is determined by the serial number of the (p) bits taken from the (m) bits in the random number.

4. Process according to claim 1, characterized in that a message is constituted of a sequence of bits locatable by their serial numbers or addresses as a function of the positions they occupy in the message, and that the processing circuits create the different modules (M1, M2,...Mm) from the original message in order to calculate the signature of each these modules before bringing about its memorizing by the processing circuits of the portable object, as follows:
- each module is constituted by taking a certain number of message bits according to a predetermined rule and/or a rule created by the processing circuits of the portable object, taking into account random elements for example, and the rule, having served to constitute each module from the original message is kept in the portable object so as to reconstitute, from a message to be checked, the modules of this message according to the same rule used for constituting the modules from the original message.

5. Process according to claim 1, characterized in that the message is organized in the form of binary words, each containing a given number of bits, a piece of information constituting a software instruction or part of an instruction, or a datum or part of a datum, the integrity of which is to be preserved, for correct running of a program using these instructions and/or data, the constitution of modules (M1, M2,...Mm) with a view to calculating the signature of at least certain of them, with a view to checking the integrity of the message, consists of causing the processing circuits that are to calculate the signatures considered, firstly to constitute a certain number (n) of blocks (B1, B2,...Bn) each containing a certain number of pieces of information such that each piece of information or part of a piece contained in a block can be located by the positions of the bits which constitute this piece of information or part of a piece in the block considered, and in that it consists, for constituting a given module, of causing the processing circuits to take at least one bit from each of the blocks according to a given rule.

6. Process according to claim 5, characterized in that the grouping of the information in order to form blocks, is carried out by taking the information in the order in which it appears when the message is read.

7. Device for checking the integrity, against an original message, of a subsequent message containing information, arranged to cause processing means to calculate a signature (S) from the original message (M) to which an algorithm (A) is applied, characterized in that it comprises a portable object comprising means for connection to a device (2), such as a computer, able to execute the message, said portable object also comprising processing circuits (11) and memorizing means including a protected non-volatile memory area (10) accessible only by the processing circuits, in which:-
- the original message (M) is divided into a total number (m) of modules (M1, M2,...Mm) and the protected memory area memorizes a plurality of signatures (S1, S2,...Sm), each signature being the result of applying the algorithm (A) to a given module of the original message;
the portable object containing the algorithm (A) being arranged to:
- select, in the subsequent message, a partial number (p) of modules less than the total number (m) of modules, said partial number being such that the probability of detecting an alteration in the subsequent message, by considering only the partial number of modules, has a given value;
- use the processing circuits to apply said algorithm to each selected module so as to calculate a respective signature;
- select, in the protected memory area, the signatures of the modules of the original message which correspond to the selected modules of the subsequent message and compare these signatures to those of the subsequent message; and
- cause the portable object to send a response indicating whether the integrity between the original and subsequent messages is confirmed, i.e. whether said signatures of the original message correspond respectively to those of the subsequent message.
